# EUROPÄISCHE PATENTSCHRIFT

(11) **EP 2 018 334 B1**
(45) Veröffentlichungstag und Bekanntmachung des Hinweises auf die Patenterteilung: **22.06.2011**
(21) Anmeldenummer: 07711234.0
(22) Anmeldetag: 16.03.2007
(51) Int. Cl.: B65G 47/90, B65G 47/91

(54) **SAUGGREIFER**
SUCTION GRIPPER
PINCE ASPIRANTE

(30) Priorität: 11.05.2006 DE 102006022277
(43) Veröffentlichungstag der Anmeldung: 28.01.2009
(73) Patentinhaber: Deutsche Post AG, 53113 Bonn (DE)
(72) Erfinder: SCHMIDT, Kolja, 28203 Bremen (DE); ECHELMEYER, Wolfgang, 27711 Osterholz-Scharmbeck (DE); FRANCK, Hermann, 27721 Ritterhude (DE)
(74) Vertreter: Jostarndt, Hans-Dieter
(86) Internationale Anmeldenummer: PCT/DE2007/000480
(87) Internationale Veröffentlichungsnummer: WO 2007/131463

(56) Entgegenhaltungen:
- EP-A- 0 845 434
- US-A1- 2004 207 219

## Beschreibung

Die vorliegende Erfindung betrifft einen Sauggreifer gemäss dem Oberbegriff des Anspruchs 1, wie er aus der EP 0 845 434 A1 bekannt ist.

Beim Entladen zum Beispiel eines deckenhoch beladenen Containers ist man häufig mit einer geschlossenen Paketwand konfrontiert. In einem derartigen Fall ist von allen Paketen nur die Vorderseite zu sehen. Dies weist den Nachteil auf, daß ein zu greifendes Paket nur eine Angriffsfläche bietet und wenig Bewegungsfreiraum existiert. Da sich aufgrund des Beladens und/oder beim Transport die unter dem zu greifenden Paket befindlichen Pakete häufig verformen und/oder eindrücken, liegt das zu greifende Paket oft in einer Art Mulde und wird es durch teilweise nicht unerhebliche Klemmkräfte in seiner Position gehalten. Demzufolge müssen an dem Paket Kräfte in zwei Richtungen aufgebracht werden. Zum einen Kräfte nach oben, um es aus der Mulde zu heben, und zum anderen senkrecht vom Paketstapel, um es aus diesem herauszuziehen. Das Anheben ist hierbei notwendig, da sich sonst beim Herausziehen das untere Paket mitbewegen würde oder im Extremfall der gesamte Paketstapel kippen würde.

Bei der Kraftaufbringung senkrecht zum Paket wurden bisher sehr gute Ergebnisse mit Sauggreifern, wie zum Beispiel Faltenbalgsauggreifem erreicht, wobei diese allerdings den Nachteil aufweisen, bei seitlichen Kraftverläufen abzureißen, was ein Anheben von Paketen bei stirnseitigem Saugen bisher unmöglich machte.

Aus der Europäischen Patentanmeldung EP 0 845 434 A1 ist beispielsweise ein länglicher Saugnapf mit einem Faltenbalg bekannt, der zusätzlich eine Nadel zum Greifen eines Gegenstands aufweist.

Der Erfindung liegt ausgehend vom Stand der Technik die Aufgabe zugrunde, einen Sauggreifer bereitzustellen, mit dem ein Anheben von Paketen auch bei stirnseitigem Saugen möglich ist.

Erfindungsgemäß wird diese Aufgabe gelöst durch einen Sauggreifer, bei dem mindestens eine Nadel zum Greifen eines Gegenstands vorgesehen ist und die Nadel auf einem Nadeleinsatz angeordnet ist, dadurch gekennzeichnet, daß der Nadeleinsatz in einer Ansaugöffnung montiert ist, wobei der Nadeleinsatz eine Befestigungshülse zur Befestigung in der Ansaugöffnung und eine an dem vorderen Längsende der Befestigungshülse angeordnete und sich in einem rechten Winkel dazu erstreckende Nadelplatte umfasst, wobei die Bohrung der Befestigungshülse mit der Vorderseite des Nadeleinsatzes durch eine Verbindungsöffnung in dem Nadeleinsatz in Verbindung steht.

Durch geeignete Wahl der Anzahl von Nadeln, deren Länge und Flächendichte können geeignete Greifkräfte an einem Paket ausgeübt werden. Selbstverständlich können auch mehrere Nadeln auf dem Nadeleinsatz angeordnet sein.

Günstigerweise ist der Nadeleinsatz auswechselbar. Dadurch kann zum Beispiel die Anzahl der Nadeln und/oder deren Länge und/oder deren Flächendichte in Abhängigkeit von dem Anwendungsfall variiert werden.

Vorteilhafterweise ist der Nadeleinsatz nachrüstbar, d.h. auch bei bereits vorhandenen Sauggreifern nachträglich montierbar.

Gemäß einer weiteren besonderen Ausführungsform der Erfindung kann vorgesehen sein, dass der Nadeleinsatz einschraubbar ist.

Alternativ kann der Nadeleinsatz auch klemmbar sein.

Erfindungsgemäß ist der Nadeleinsatz in einer Ansaugöffnung montiert. Wenn es sich um die einzige Ansaugöffnung des Sauggreifers handelt, so muss natürlich der Nadeleinsatz darin so montierbar sein, dass immer noch eine Ansaugwirkung mit dem Sauggreifer erzielt wird.

Zweckmäßigerweise ist mindestens ein freiliegender Lüftungsschlitz vorgesehen, der sich von dem Rand der Öffnung einerseits in der Nadelplatte in Richtung nach außen und andererseits in der Befestigungshülse in Richtung auf das hintere Längsende der Befestigungshülse erstreckt. Dadurch erhält man einen optimalen Vakuumaufbau. Es wird auch ein Festsaugen des Nadeleinsatzes selbst vermieden. Auch Etiketten oder ähnliches von Paketen können die Ansaugöffnung so nicht verstopfen, da sie hinter der Nadelplatte liegt.

Gemäß einer weiteren besonderen Ausführungsform der Erfindung kann vorgesehen sein, dass der Sauggreifer ein Faltenbalgsauggreifer ist.

Insbesondere kann dabei die Ansaugöffnung mittig angeordnet sein.

Schließlich ist alternativ denkbar, dass der Sauggreifer ein Flächensauggreifer ist. Mit Flächensauggreifern sollen Saugmatten gemeint sein, wie sie beispielsweise von der Firma Unigripper geliefert werden.

Der Erfindung liegt die überraschende Erkenntnis zugrunde, daß durch die Kombination eines Sauggreifers mit mindestens einer Nadel das physikalische Wirkprinzip von Sauggreifern, nämlich durch Halten durch Kraftschluß, mit dem physikalischen Wirkprinzip von Nadelgreifern, nämlich Halten durch Formschluß, kombiniert und dadurch die Kraftautbringung an einem Paket somit auf drei Richtungen erweitert wird, ohne es in nennenswerter Weise zu beschädigen.

Weitere Merkmale und Vorteile der Erfindung ergeben sich aus den Ansprüchen und der nachstehenden Beschreibung, in der ein Ausführungsbeispiel anhand der schematischen Zeichnungen im einzelnen erläutert wird, in denen:
- Figur 1: eine Draufsicht auf einen Sauggreifer gemäß einer besonderen Ausführungsform der Erfindung von unten zeigt;
- Figur 2: eine Schnittansicht entlang der Linie II-II von Figur 1 zeigt;

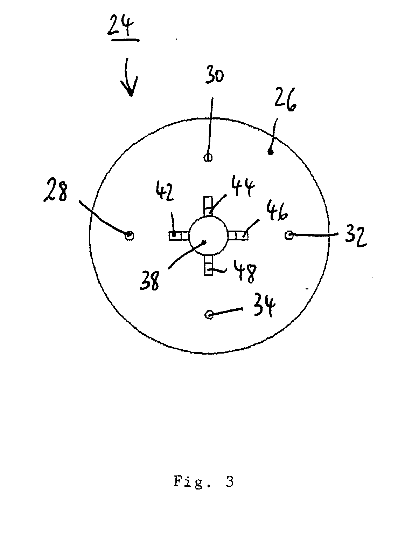

- Figur 3: eine Einzeldarstellung des Nadeleinsatzes des Sauggreifers von Figur 1 in Draufsicht von unten zeigt;

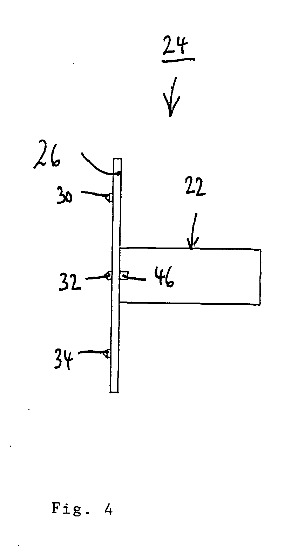

- Figur 4: eine Seitenansicht des Nadeleinsatzes von Figur 3 zeigt; und

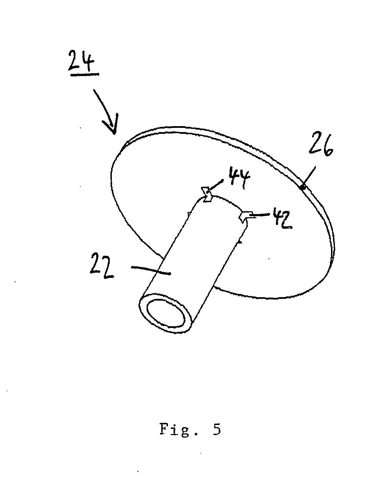

- Figur 5: eine perspektivische Ansicht des Nadeleinsatzes von Figur 4 von hinten zeigt.

In der nachfolgenden Beschreibung bezieht sich die Angabe "vordere" auf die Ansaugseite bzw. die zu einem zu greifenden Gegenstand gerichtete Seite.

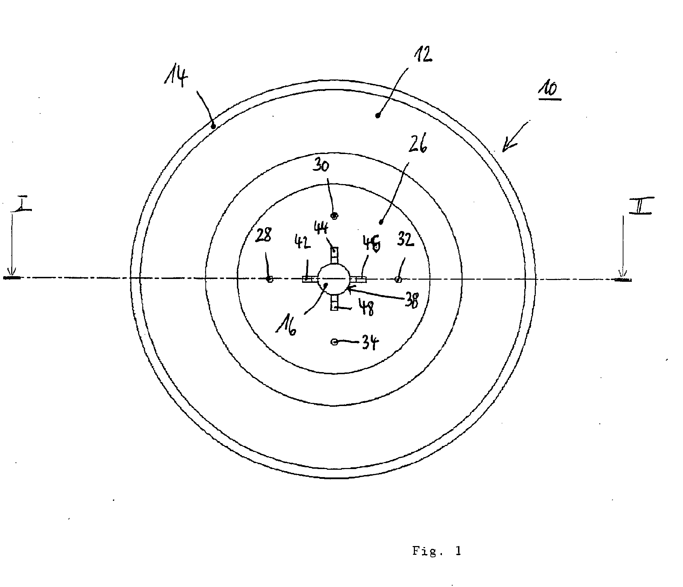

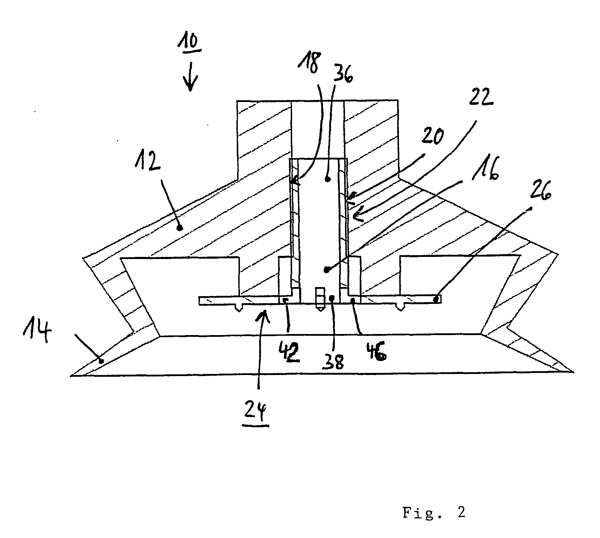

Wie sich aus den Figuren 1 und 2 ergibt, handelt es sich bei dem Sauggreifer 10 um einen Faltenbalgsauggreifer mit einem faltenbalgartigen Körper 12 aus elastischem Kunststoff mit einer umlaufenden vorderen Dichtlippe 14 und einer mittigen hinteren Ansaugöffnung 16, die mit einer Unterdruckquelle (nicht gezeigt) verbindbar ist. In dem vorderen Ende der Ansaugöffnung 16 ist ein Innengewinde 18 vorgesehen, in das das Außengewinde 20 der Befestigungshülse 22 eines Nadeleinsatzes 24 geschraubt ist. Der Nadeleinsatz 24 weist eine an dem vorderen Ende der Befestigungshülse 22 angeordnete und sich dazu im rechten Winkel erstreckende, darauf mittig angeordnete Nadelplatte 26 auf Die Nadelplatte 26 ist kreisrund gestaltet und weist seitlich umlaufend einen Abstand zum Körper 12 sowie vier auf demselben Radius um 90 ° beabstandete Nadeln 28, 30, 32 und 34 auf. Die Nadeln 28, 30, 32, und 34 erstrecken sich nach vorne, d. h. zu einem zu greifenden Gegenstand und weisen eine Länge im Bereich von zwei bis drei Millimetern auf. Zur Aufrechterhaltung der Ansaugfunktion des Faltenbalgsauggreifers steht die Bohrung 36 der Befestigungshülse 22 über eine kreisrunde Verbindungsöffnung 38 mit der Vorderseite des Faltenbalgsauggreifers in Verbindung. Darüber hinaus erstrecken sich an den jeweiligen Winkelpositionen der Nadeln 28, 30, 32 und 34 jeweilige freiliegende Lüftungsschlitze 40, 42, 44 bzw. 46 von dem Rand der Verbindungsöffnung 38 einerseits über eine gewisse Strecke in der Nadelplatte 26 radial nach außen und andererseits in der Befestigungshülse 22 über eine gewisse Strecke in Richtung auf das hintere Längsende der Befestigungshülse 22. Dadurch erhält man einen guten Vakuumaufbau. Hierzu kann zusätzlich ein vertikaler Abstand (nicht gezeigt) zwischen der Nadelplatte 26 und dem Körper 12 vorgesehen sein. Alternativ könnten auch Verbindungskanäle in dem Körper 12 zur Herstellung einer Ansaugverbindung mit den Schlitzen 46 und 48 an der Rückseite der Nadelplatte 26 vorgesehen sein.

Dadurch daß die Nadeln 28, 30, 32 und 34 durch den Unterdruck des Faltenbalgsauggreifers in unmittelbarem Kontakt zur Paketoberfläche gehalten werden, weil die Paketoberfläche quasi an die Nadeln gezogen wird, und nicht wie bei herkömmlichen Nadelgreifem die Nadeln bis zum Eindringen gegen das Paket gedrückt werden, findet keine Verformung des Pakets statt. Des weiteren führen die sehr geringe Länge der Nadeln und der Anschlag durch die Nadelplatte, der ein Durchstoßen verhindert, zu einer minimalen Beschädigung des Pakets. Es ergibt sich lediglich eine oberflächliche Beschädigung in Form eines gepunkteten Musters. Die Anzahl und Anordnung der Nadeln sowie der dichte Formschluß ermöglichen eine erhebliche Kraftaufbringung in alle seitlichen Richtungen und verhindern ein Aufreißen der Löcher bei Belastung.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Sauggreifer (10), bei dem mindestens eine Nadel (28;30;32;34) zum Greifen eines Gegenstands vorgesehen ist und die Nadel (28; 30; 32; 34) auf einem Nadeleinsatz (24) angeordnet ist,
**dadurch gekennzeichnet,**
**daß** der Nadeleinsatz (24) in einer Ansaugöffnung (16) montiert ist, wobei der Nadeleinsatz (24) eine Befestigungshülse (22) zur Befestigung in der Ansaugöffnung (16) und eine an dem vorderen Längsende der Befestigungshülse (22) angeordnete und sich in einem rechten Winkel dazu erstreckende Nadelplatte (26) umfasst, wobei die Bohrung (36) der Befestigungshülse (22) mit der Vorderseite des Nadeleinsatzes (24) durch eine Verbindungsöffnung (38) in dem Nadeleinsatz (24) in Verbindung steht.

2. Sauggreifer (10) nach Anspruch 1,
**dadurch gekennzeichnet,**
**daß** der Nadeleinsatz (24) auswechselbar ist.

3. Sauggreifer (10) nach einem der Ansprüche 1 und 2,
**dadurch gekennzeichnet,**
**daß** der Nadeleinsatz (24) nachrüstbar ist.

4. Sauggreifer (10) nach einem der Ansprüche 1 bis 3,
**dadurch gekennzeichnet,**
**daß** der Nadeleinsatz (24) einschraubbar ist.

5. Sauggreifer (10) nach einem der Ansprüche 1 bis 3,
**dadurch gekennzeichnet,**
**daß** der Nadeleinsatz (24) klemmbar ist.

6. Sauggreifer (10) nach einem der Ansprüche 1 bis 5,
**dadurch gekennzeichnet,**
**daß** mindestens ein freiliegender Lüftungsschlitz (40, 42, 44, 46) vorgesehen ist, der sich von dem Rand der Öffnung einerseits in der Nadelplatte (26) in Richtung nach außen und andererseits in der Befestigungshülse (22) in Richtung auf das hintere Längsende der Befestigungshülse (22) erstreckt.

7. Sauggreifer (10) nach einem der vorangehenden Ansprüche,
**dadurch gekennzeichnet,**
**daß** er ein Faltenbalgsauggreifer ist.

8. Sauggreifer (10) nach Anspruch 7,
**dadurch gekennzeichnet,**
**daß** die Ansaugöffnung (16) mittig angeordnet ist.

9. Sauggreifer (10) nach einem der Ansprüche 1 bis 6,
**dadurch gekennzeichnet,**
**daß** er ein Flächensauggreifer ist.

## Claims

1. A suction gripper (10), in which at least one needle (28; 30; 32; 34) for gripping an object is provided, and the needle (28; 30; 32; 34) is arranged on a needle insert (24),
**characterized in that**
the needle insert (24) is mounted in a suction opening (16), whereby the needle insert (24) comprises a fastening sleeve (22) for fastening it in the suction opening (16) as well as a needle plate (26) that is arranged on the front lengthwise end of the fastening sleeve (22) and that extends at a right angle thereto, whereby the bore (36) of the fastening sleeve (22) is connected to the front of the needle insert (24) by a connection opening (38) in the needle insert (24).

2. The suction gripper (10) according to Claim 1, **characterized in that** the needle insert (24) is replaceable.

3. The suction gripper (10) according to one of Claims 1 and 2, **characterized in that** the needle insert (24) can be retrofitted.

4. The suction gripper (10) according to any of Claims 1 to 3, **characterized in that** the needle insert (24) can be screwed in.

5. The suction gripper (10) according to any of Claims 1 to 3, **characterized in that** the needle insert (24) can be clamped in place.

6. The suction gripper (10) according to any of Claims 1 to 5, **characterized in that** at least one exposed ventilation slit (40, 42, 44, 46) is provided, which extends from the edge of the opening, on the one hand, in the needle plate (26) towards the outside and, on the other hand, in the fastening sleeve (22) towards the back lengthwise end of the fastening sleeve (22).

7. The suction gripper (10) according to any of the preceding claims, **characterized in that** it is a bellows suction gripper.

8. The suction gripper (10) according to Claim 7, **characterized in that** the suction opening (16) is arranged in the middle.

9. The suction gripper (10) according to any of Claims 1 to 6, **characterized in that** it is a flat-surface suction gripper.

## Revendications

1. Préhenseur aspirant (10), dans lequel est prévue au moins une aiguille (28; 30; 32; 34) pour prendre un objet et l'aiguille (28; 30; 32; 34) est située sur un porte-aiguille(s) (24), **caractérisé en ce que** le porte-aiguille(s) (24) est monté dans un orifice d'aspiration, le porte-aiguille(s) (24) comprenant un manchon de fixation (22) pour la fixation dans l'orifice d'aspiration (16) et une plaque d'aiguille(s) (26) située à l'extrémité longitudinale avant du manchon de fixation (22) et s'étendant à angle droit de celle-ci, le perçage (36) ménagé dans le manchon de fixation (22) étant relié à la face avant du porte-aiguille(s) (24) par un orifice de liaison (38) ménagé dans le porte-aiguille(s) (24).

2. Préhenseur aspirant (10) selon la revendication 1, **caractérisé en ce que** le porte-aiguille(s) (24) peut être remplacé.

3. Préhenseur aspirant (10) selon l'une des revendications 1 et 2, **caractérisé en ce que** le porte-aiguille(s) (24) peut être monté ultérieurement.

4. Préhenseur aspirant (10) selon l'une des revendications 1 à 3, **caractérisé en ce que** le porte-aiguille(s) (24) peut être vissé.

5. Préhenseur aspirant (10) selon l'une des revendications 1 à 3, **caractérisé en ce que** le porte-aiguille(s) (24) peut être serré.

6. Préhenseur aspirant (10) selon l'une des revendications 1 à 5, **caractérisé en ce qu'**est prévue au moins une fente d'aération dégagée (40, 42, 44, 46) qui s'étend du bord de l'orifice dans la plaque d'aiguille(s) (26), d'une part, vers l'extérieur et, d'autre part, dans le manchon de fixation (22) en direction de l'extrémité longitudinale arrière du manchon de fixation (22).

7. Préhenseur aspirant (10) selon l'une des revendications précédentes, **caractérisé en ce qu'**il est un préhenseur à ventouse(s) à soufflet(s).

8. Préhenseur aspirant (10) selon la revendication 7, **caractérisé en ce que** l'orifice d'aspiration (16) est situé centralement.

9. Préhenseur aspirant (10) selon l'une des revendications 1 à 6, **caractérisé en ce qu'**il est un préhenseur à surface ventouse.
